Europäisches Patentamt

European Patent Office

Office européen des brevets

(11) Veröffentlichungsnummer: **0 134 288**
**B1**

# EUROPÄISCHE PATENTSCHRIFT

(45) Veröffentlichungstag der Patentschrift:
**11.05.88**

(51) Int. Cl.⁴: **B 64 G 1/10**

(21) Anmeldenummer: **83108702.8**

(22) Anmeldetag: **03.09.83**

(54) Variabel konfigurierbares Satellitensystem.

(43) Veröffentlichungstag der Anmeldung:
**20.03.85 Patentblatt 85/12**

(45) Bekanntmachung des Hinweises auf die Patenterteilung:
**11.05.88 Patentblatt 88/19**

(84) Benannte Vertragsstaaten:
**DE FR GB IT NL**

(56) Entgegenhaltungen:
**FR - A - 2 472 509**
**FR - A - 2 476 018**
**GB - A - 2 091 194**
**US - A - 3 700 193**
**US - A - 3 709 447**
**US - A - 4 057 207**

(73) Patentinhaber: **ERNO Raumfahrttechnik Gesellschaft mit beschränkter Haftung, Hünefeldstrasse 1-5, D-2800 Bremen (DE)**

(72) Erfinder: **Nauck, Joachim Dr., Am Dobben 133, D-2800 Bremen 1 (DE)**

ACTORUM AG

## Beschreibung

Die Erfindung bezieht sich auf ein variabel konfigurierbares Satellitensystem mit mindestens einem auf die Erde ausrichtbaren Nutzlastmodul und mindestens einem über eine Kupplungsvorrichtung lösbar damit verbundenen auf die Sonne und eine weitere Referenz (Polarstern) getrennt ausrichtbaren Servicemodul.

Satellitensysteme werden auf ihrer Umlaufbahn zur Erde und zur Sonne ausgerichtet und entweder mit Hilfe eines Dralleffektes in ihrer Lage bestimmt oder, wenn dieses unerwünscht ist, auf Referenzen ausgerichtet. Die bekannten Satelliten bestehen aus zwei drehbar miteinander verbundenen Körpern, von denen der eine zur Richtungsstabilisierung rotiert, während der andere relativ stationär bleibt und die Basis für die Ausrüstung bildet. Im Betrieb ist es erforderlich, den Satelliten mit einer relativ stabilen und gleichbleibenden Orientierung im Raum zu halten. Diese Orientierung wird meist noch unter Ausnutzung der Kreiselwirkung aufrecht erhalten, das heisst, ein Teil des Satelliten wird um eine feste Achse gedreht.

So ist es bekannt, die Brauchbarkeit solcher rotierenden Raumkörper dadurch zu erhöhen, dass diese mit einer nicht rotierenden Plattform versehen ist, die ihre Ausrichtung relativ zur Erde beibehält und die als Träger von Nutzlasten dient.

Es ist auch bereits bekannt, Satelliten in ihren drei Achsen zu stabilisieren, indem diese auf drei Referenzen ausgerichtet werden. Dieses kann mit Hilfe von Sensoren und entsprechenden Antriebsmitteln erfolgen, wobei im letzten Fall der meist störende Dralleffekt entfällt.

Wie aus der FR-A 2 472 509 bekannt, kann das aus zwei Modulen zusammengesetzte Satellitensystem unterschiedlich ausgerichtet werden. Das Servicemodul ist sonnenorientiert, während das Nutzlastmodul erdorientiert, das heisst, auf die Erde ausgerichtet wird. Das Servicemodul als Energiequelle ist für die einzelnen Bewegungsabläufe bestimmend, weil der Solargenerator immer der Sonne nachgefahren werden muss, während das Nutzlastmodul erdorientiert bleibt. Das bedeutet, dass zwischen dem Nutzlastmodul und dem Servicemodul eine drehbare Kupplungsvorrichtung angeordnet werden muss, um die gewünschte Ausrichtung zu erzielen.

Die Aufgabe der Erfindung besteht daher darin, ein Satellitensystem in Baukasteneinheiten zu schaffen, das mit jederzeit austauschbaren Modulen einen beliebigen auf mehrere Referenzen ausrichtbaren und erweiterbaren Satellitenaufbau gestattet. Darüber hinaus ist es Aufgabe der Erfindung, die Nutzlastmodule so an den Satelliten anzubringen, dass sie sich unabhängig von den Bewegungen des Servicemoduls entsprechend ihrem Sensor zur Erde ausrichten. Diese Aufgabe wird durch die Kennzeichenmerkmale des Anspruchs 1 gelöst. Weiterbildungen und vorteilhafte Ausgestaltungen der Erfindung sind in den Ansprüchen 2–6 angegeben.

Das erfindungsgemässe Satellitensystem besteht aus mindestens zwei Modulen, von denen das eine als Servicemodul zur Energieversorgung dient, während die anderen als Nutzlasten ausgebildeten Module daran ankoppelbar sind. Das Servicmodul ist eine selbständige Einheit, ausgerüstet mit einem Generator in Form eines Solargenerators, der eine Fläche des quaderförmigen Moduls bedeckt. Diese Fläche ist immer der Sonne zugekehrt, so dass die übrigen, verbleibenden Flächen sonnenabgewandt bzw. nur geringer Sonnenenergie ausgesetzt sind. Damit eignen sich alle übrigen Flächen des Servicemoduls zum Ankoppeln von Nutzlasten. Gleichzeitig wird das Servicemodul jedoch so ausgestaltet, dass mehrere Servicemodule miteinander koppelbar sind. In den Schnittstellen, dass heisst, in der Ebene zwischen den Modulen, sind sog. BAPTA (bearing and power transfer assembly) angeordnet, deren Aufgabe darin besteht, Energieübertragungen vom Servicemodul zum Nutzlastmodul vorzusehen.

Die Generatorfläche des Servicemoduls kann durch einen weiteren Generator, der nach beiden Seiten gerichtet angebracht ist, ergänzt werden. Hierbei kann der eigentliche Generator, der nur eine Fläche des Moduls selbst ausmacht, als reine Energieversorgung für das Servicemodul dienen, wohingegen die zusätzlich angeordneten Solargeneratoren dann die Energie für die Nutzlast bereitstellen.

Das Satellitensystem ist mit Baukasteneinheiten aufgebaut, wobei eine Baukasteneinheit das Servicemodul ist, während die übrigen Baukasteneinheiten die Nutzlasten bilden. Wahlweise können mehrere Servicemodule mit mehreren Nutzlastmodulen zusammengekoppelt werden. Das Servicemodul ist in drei Achsen stabil. Es wird stabilisiert durch eine Bahn- und Lageregelung. Die Hauptreferenz ist hierbei die Sonne. Die Nutzlastmodule sind in der Lage, sich gegenüber dem Servicemodul zu drehen und damit auf die Erde auszurichten. Bei dieser Anordnung ist das Servicemodul gegnüber der Sonne mit seiner einen Fläche konstant ausgerichtet, das heisst, das einmal in die Umlaufbahn gebrachte Servicemodul verändert seine Lage nicht mehr. Die Nutzlastmodule sind dieser Lage des Servicemoduls gegenüber drehbar angeordnet und richten sich selbsttätig auf die Erden aus, so dass das ganze System ein sonnengeführtes System ist.

Die Erfindung wird anhand der Zeichnung näher beschrieben.

Fig. 1 zeigt ein mit Nutzlasten bestücktes Servicemodul,

Fig. 2 zeigt die Koppelstellen in den Ebenen zwischen den Modulen,

Fig. 3 zeigt die Generatorseite des Servicemoduls.

Das Satellitensystem besteht aus dem Servicmodul 1, das als Energieträger dient und mit Sonnengeneratoren 2, 8 bestückt ist. Die Sonnengeneratoren 8 können so angeordnet sein, dass sie an der Kante des Servicemoduls zum Anliegen kommen und ihre Verspannung mit dem Servicemodul durch Seile 3 erfolgt, die über Kreuz mit den äusseren Kanten der Sonnengeneratoren 8 und den Eckpunkten, die auf der Ebene der angelenkten Sonnengeneratoren diesen gegenüberliegen, des Servicemoduls angelenkt sind. Dadurch ergibt sich ein ausreichender Hebelarm, um bei Seilzug die Fläche des Sonnengenerators verspannen bzw. drehen zu können. Diese Seile 3 werden mit Hilfe von nicht näher dargestellten Winden über Sensoren gespannt, und zwar derart, dass mit Hilfe diese Seilzuges durch Verspannen der Generatorfläche der einwirkende Sonnendruck den Satelliten dreht, bis die Generatorfläche senkrecht zur Sonne steht. Das Satellitensystem ist damit gegenüber der Sonne ausgerichtet.

Das Servicemodul 1 ist somit Energiequelle für ein System von Nutzlasten, wobei sich das Modul, wie bereits erläutert, gegenüber der Sonne selbsttätig fixiert. An den nicht mit Solargeneratoren bestückten Flächen sind nun Kopplungsvorrichtungen 4 angeordnet. Diesen Kopplungsvorrichtungen sind je ein BAPTA zugeordnet, durch die eine Energieübertragung von dem Servicemodul auf anzukoppelnde Nutzlastmodule ermöglicht wird. Das Nutzlastmodul wird nun an die Kopplungsvorrichtung 4 angekoppelt. Die notwendige Energieversorgung für das Nutzlastmodul erfolgt vom Servicemodul über das BAPTA. Das Nutzlastmodul ist mit einem Sensor bestückt, der es ermöglicht, dass dieses Nutzlastmodul nach dem Ankoppeln sich selbständig auf die Erde ausrichtet; hierzu dient ein in der Trennebene befindliches Stellglied. Es können auch die Nutzlastmodule mit eigenem Antrieb versehen werden, die ihre Energie vom Servicemodul erhalten.

Die Nutzlastmodule sind so ausgebildet, dass mehrere aneinander koppelbar sind, so dass das nachträgliche Ankoppeln von weiteren Nutzlastmodulen jederzeit möglich ist. Ebenso ist selbstverständlich der Austausch einzelner Nutzlastmodule jederzeit gegeben.

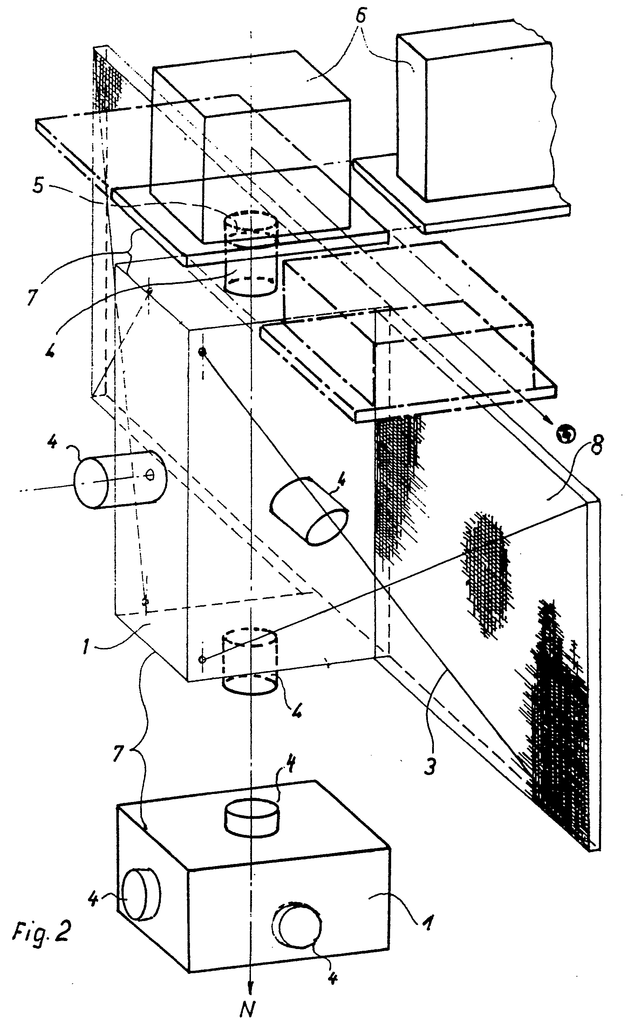

Die Kupplungsvorrichtungen 4 sind so ausgebildet, dass sie sowohl zum Ankoppeln der Nutzlasten, als auch zum Ankoppeln weiterer Servicemodule dienen. Kopplungsvorrichtungen sind an allen freien, nicht von der Sonne direkt bestrahlten Flächen des Servicemoduls 1 angebracht. Fig. 2 zeigt, wie ein Servicemodul 1 einerseits und mehrere Nutzlastmodule 6 andererseits an ein Servicemodul angekoppelt werden.

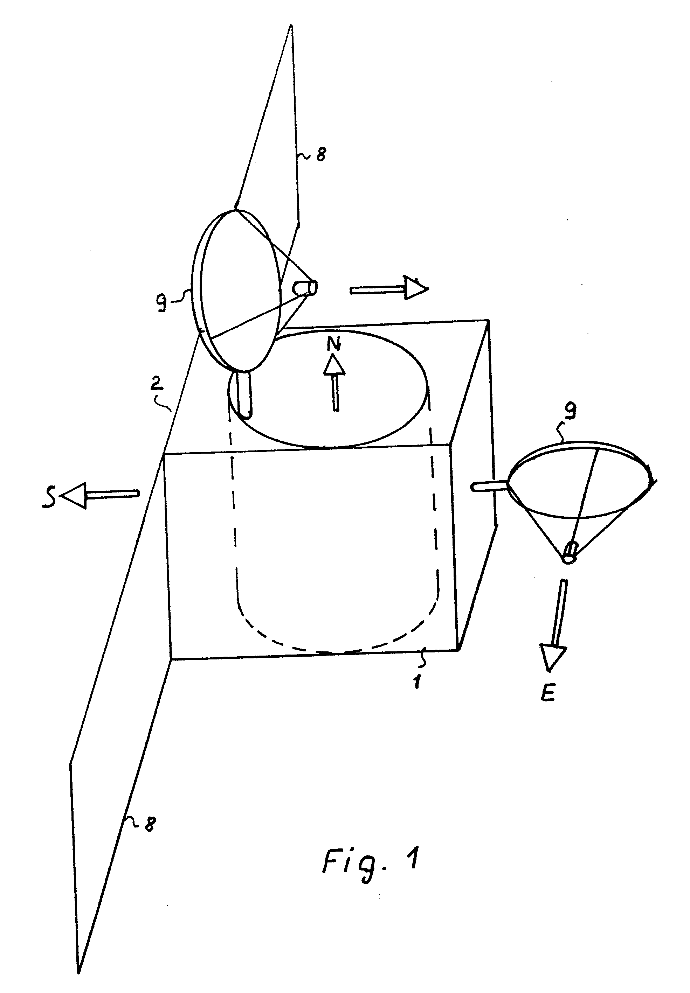

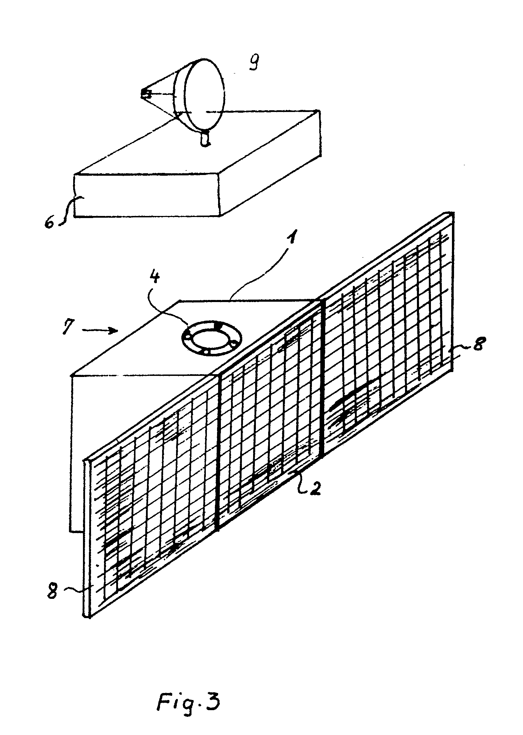

In den Fig. 1 und 3 sind die Nutzlastmodule als Antenne 9 dargestellt.

Durch die Trennebene 7 zwischen Servicemodul und Nutzlastmodul wird nicht nur die An- und Abkoppelbarkeit der Module bewirkt, sondern auch ihre Unabhängigkeit voneinander, nämlich selbsttätig, ohne Beeinflussung des anderen Moduls, sich auf die jeweiligen vorgegebenen Parameter ausrichten zu können. Hierin liegt der grosse Vorteil der Erfindung, die es ermöglicht, sämtliche derzeit bekannten Missionen – wie polare, sonnensynchrone, geostationäre Umlaufbahnen

– durchzuführen, und zwar mit dem standartisierbaren Servicemodul. Ein Servicemodul, einmal in seine Bahn gebracht, ist in der Lage, zeitlich unabhängig die entsprechenden Nutzlastmodule aufzunehmen und wirksam werden zu lassen. Dieses war bisher nicht möglich.

Bezugszeichenliste
1 Servicemodul
2 Sonnengenerator
3 Seilzug
4 Kopplungsvorrichtung
5 BAPTA
6 Nutzlastmodul
7 Trennebene
8 Zusatzgenerator
9 Antenne

Patentansprüche

1. Satellitensystem mit mindestens einem auf die Erde ausrichtbaren Nutzlastmodul (6) und mindestens einem über eine Kupplungsvorrichtung lösbar damit verbundenen, auf die Sonne und eine weitere Referenz (Polarstern) getrennt ausrichtbaren Servicemodul (1), dadurch gekennzeichnet, dass eine Fläche des als Quader ausgebildeten Servicemoduls (1) als Solargeneratorfläche (2) ausgebildet ist und alle nicht von der Sonne bestrahlten Flächen des Servicemoduls (1) mit Kopplungsvorrichtungen (4) zum Ankoppeln weiterer gegebenenfalls mehrere Module umfassende Nutzlastmodule (6) und/oder Servicemodule (1) versehen sind.

2. Satellitensystem nach Anspruch 1, dadurch gekennzeichnet, dass an die Solargeneratorfläche (2) des Servicemoduls (1) weitere Solargeneratoren (8) anschliessbar sind.

3. Satellitensystem nach Anspruch 1 und 2, dadurch gekennzeichnet, dass die Kopplungsvorrichtung (4) bewirkt, dass das Nutzlastmodul (6) gegenüber dem Servicemodul (1) unabhängig drehbar ist.

4. Satellitensystem nach den Ansprüchen 1 bis 3, dadurch gekennzeichnet, dass die Nutzlastmodule (6) jederzeit gegeneinander austauschbar und auswechselbar sind.

5. Satellitensystem nach den Ansprüchen 1 bis 4, dadurch gekennzeichnet, dass die Energieversorgung der Nutzlastmodule (6) mittels eines mit der Kopplungsvorrichtung verbundenen BAPTA (Bearing and Power Transfer Assembly) erfolgt.

6. Satellitensystem nach Anspruch 1, dadurch gekennzeichnet, dass die Sonnengeneratoren (8) über Kreuz mit Seilen (3) abgespannt sind, die, von Sensoren beeinflusst, durch unterschiedlichen Seilzug eine Verdrehung bzw. Verspannung der Generatorfläche bewirken und damit die Einwirkung des Sonnendrucks regeln.

Claims

1. A satellite system with at least one payload module (6) which can be aligned on the ground, and at least one service module (1) connected releasably to the former by a coupling arrangement and separately aligned on the sun and a further reference point (polar star), characterised in that a surface of the service module (1) in the form of a square block is made as a solar generator surface (2) and each surface of the service module (1) not irradiated by the sun is provided with coupling arrangements (4) for the connection of further, possibly several, modules including payload modules (6) and/or service modules (1).

2. Satellite system according to claim 1, characterised in that further solar generators (8) can be locked on to the solar generator surfaces (2) of the service module (1).

3. Satellite system according to claim 1 and 2, characterised in that the coupling arrangement (4) allows the payload module (6) to rotate independently relative to the service module (1).

4. Satellite system according to claims 1 to 3, characterised in that the payload modules (6) are mutually exchangeable and interchangeable at any time.

5. Satellite system according to claims 1 to 4, characterised in that the energy supply of the payload module (6) is provided by a BAPTA (Bearing and Power Transfer Assembly) associated with the coupling arrangement.

6. Satellite system according to claim 1, characterised in that the solar generators (8) are anchored by lines (3) via a cross which, influenced by sensors, produce a twisting or bracing of the generator surfaces by differential tension in the lines, and thus regulate the effect of the solar pressure.

**Revendications**

1. Système de satellite comportant au moins un module portant une charge utile (6), aligné sur la terre, et au moins un module de service (1) relié de manière amovible à celui-ci par un dispositif d'accouplement, ce module de service étant aligné sur le soleil et sur une autre référence (étoile polaire), caractérisé en ce qu'une face du module de service (1) de forme parallélipipèdique est une surface de générateur solaire (2) et toutes les autres faces du module de service (1) non exposées au rayonnement solaire sont munies de dispositifs d'accouplement (4) pour fixer d'autres modules porteurs de charges (6) et/ou des modules de service (1) composés, le cas échéant, de plusieurs modules.

2. Système de satellite selon la revendication 1, caractérisé par d'autres générateurs solaires (8) susceptibles d'être raccordés à la face du module de service (1) qui constitue le générateur solaire (2).

3. Système de satellite selon les revendications 1 et 2, caractérisé en ce que les dispositifs d'accouplement (4) permettent de faire tourner le module portant la charge utile (6) indépendamment par rapport aux modules de service (1).

4. Système de satellite selon l'une des revendications 1 à 3, caractérisé en ce que les modules porteurs de charges (6) peuvent être échangés les uns par rapport aux autres ou être remplacés à tout moment.

5. Système de satellite selon les revendications 1 à 4, caractérisé en ce que l'alimentation en énergie des modules porteurs de charges utiles (6) est assurée par l'intermédiaire d'un système BAPTA (Bearing and Power Transfer Assembly) relié au dispositif d'accouplement.

6. Système de satellite selon la revendication 1, caractérisé en ce que les générateurs solaires (8) sont fixés en croix par des câbles (3) qui sont influencés par des capteurs pour réaliser par traction différentielle sur les cables, une torsion ou une mise sous tension des surfaces de générateur et régler ainsi l'action de la pression solaire.

Fig. 1

Fig. 2

Fig. 3